# EUROPÄISCHE PATENTSCHRIFT

(11) **EP 2 291 873 B1**
(45) Veröffentlichungstag und Bekanntmachung des Hinweises auf die Patenterteilung: **01.05.2013**
(21) Anmeldenummer: 09769072.1
(22) Anmeldetag: 08.05.2009
(51) Int. Cl.: H01M 2/10

(54) **BATTERIEPACK UND HANDWERKZEUGMASCHINE MIT EINEM BATTERIEPACK**
BATTERY PACK AND HANDHELD MACHINE TOOL HAVING A BATTERY PACK
BATTERIE D'ACCUMULATEURS ET MACHINE-OUTIL MANUELLE AVEC BATTERIE D'ACCUMULATEURS

(30) Priorität: 26.06.2008 DE 102008002665
(43) Veröffentlichungstag der Anmeldung: 09.03.2011
(73) Patentinhaber: Robert Bosch GmbH, 70442 Stuttgart (DE)
(72) Erfinder: OSSWALD, Alexander, 70599 Stuttgart (DE)
(86) Internationale Anmeldenummer: PCT/EP2009/055600
(87) Internationale Veröffentlichungsnummer: WO 2009/156223

(56) Entgegenhaltungen:
- WO-A1-2008/145455
- DE-A1- 3 843 907
- DE-U1- 20 318 982
- US-A1- 2003 082 439

## Beschreibung

### Stand der Technik

Die Erfindung geht aus von einem Batteriepack mit einem Gehäuse und einer Handwerkzeugmaschine mit einem Batteriepack nach den Oberbegriffen der unabhängigen Ansprüche.

Es ist bekannt, dass mehrere Batteriezellen zu einem so genannten Batteriepack verschaltet werden können, wobei unter einer "Batterie" in diesem Zusammenhang sowohl eine nicht wiederaufladbare als insbesondere eine wiederaufladbare Speichereinheit verstanden werden soll. Gewöhnlich weisen die Batteriepacks ein aus Kunststoff bestehendes Gehäuse mit Aussparungen auf, in welche zumeist zylindrische Batteriezellen eingesetzt sind.

Häufig werden solche Batteriepacks zur Stromversorgung eines Verbrauchers, wie beispielsweise eines Elektrofahrzeugs oder eines Elektrogerätes, insbesondere eines Elektrowerkzeugs verwendet. Kann dieses Batteriepack über eine mechanische Schnittstelle und einen elektrischen Stecker vom Gerät getrennt werden, so spricht man von einem Wechselpack. Im Betrieb erwärmen sich die Batteriepacks auf Grund hoher Nutzströme, indem sich infolge der Leistungsumsetzung in den Batteriezellen Verlustwärme ergibt.

Bekannt ist, die Batteriezellen in einem Batteriepack mit einem integrierten Schutzmechanismus zu versehen.

DE 203 18 982 U1 beschreibt einen Behälter zur Aufnahme von Lithium-Polymer- Batteriezellen, der durch zwei Schalen gebildet wird, welche ihrerseits eine Innenwand und eine Außenwand aufweisen. Zwischen diesen Wänden befindet sich eine Isolierung aus porösem Schaumglaszement, die verhindert, dass ein Brand oder eine Explosion im Innern des Behälters die Umwelt gefährdet. DE 38 43 907 A1 offenbart einen Batteriepack, der sich in einem doppelwandigen Gehäuse befindet, wobei zwischen der äußeren und der inneren Gehäusewandung ein mit porösem Isoliermaterial gefüllter, evakuierter Raum vorgesehen ist.

### Offenbarung der Erfindung

Die Erfindung geht aus von einem Batteriepack mit wenigstens einer Batteriezelle und mit einem Gehäuse zur Aufnahme der wenigstens einen Batteriezelle.

Es wird vorgeschlagen, dass das Gehäuse wenigstens doppelwandig mit wenigstens einer Innenhülle und einer Außenhülle ausgebildet ist, wobei zwischen der wenigstens einen Innenhülle und der Außenhülle ein Zwischenvolumen eingeschlossen ist, das eine Druckwelle aus einem Innenvolumen aufnehmen kann und dass die wenigstens eine Innenhülle einen Uberdruck ventil aufweist, das in Richtung Zwischen volumen öffnet, wenn ein unzulässig hoher Überdruck im Innenvolumen ertsteht.

Das Gehäuse kann doppelwandig oder mehr als doppelwandig ausgebildet sein. Zweckmäßigerweise ist das Zwischenvolumen ausreichend groß bemessen, um einen im Fehlerfall zu erwartenden Überdruck soweit aufzunehmen, dass die Außenhülle intakt bleiben kann. Vorteilhaft benötigen Batteriezellen im Batteriepack keinen speziellen integrierten Schutzmechanismus und keine Schutzelektronik. Ein Gerät oder eine Werkzeugmaschine, in welche das Batteriepack eingesetzt ist, sowie deren Anwender kann im Fehlerfall durch die Außenhülle geschützt werden. Der bei einer elektronischen Zellenüberwachung üblicherweise notwendige Verdrahtungsaufwand kann entfallen. Es können preiswerte Batteriezellen ohne integrierten Schutzmechanismus verwendet werden, die deutlich kostengünstiger sind als Batteriezellen mit Schutzmechanismus.

Vorzugsweise kann die Innenhülle aus einem nichtbrennbaren Material gebildet sein. Die Innenhülle kann wenigstens bereichsweise aus einem flexiblen Material gebildet sein. Günstigerweise kann die Innenhülle z.B. aus einem Gewebe gebildet sein, z.B. aus einem Kohlefasergewebe. Die Innenhülle kann auch wenigstens bereichsweise aus einem starren Material gebildet sein. Günstigerweise kann die Innenhülle z.B. aus einem Kunststoff gebildet sein. Denkbar ist auch eine Innenhülle, die sowohl flexible und starre Bereiche aufweist. Der Fachmann kann je nach Batteriepackgröße und Einsatzbedingungen die geeignete Materialwahl treffen.

Die Außenhülle kann wie die Innenhülle wenigstens bereichsweise aus einem flexiblen Material oder wenigstens bereichsweise aus einem starren Material gebildet sein. Denkbar ist auch eine Außenhülle, die flexible und starre Bereiche aufweist. Der Fachmann kann je nach Batteriepackgröße und Einsatzbedingungen die geeignete Materialwahl treffen.

Vorteilhaft kann das Zwischenvolumen mit einem Stabilisierungsmaterial gefüllt sein, das bei einem entstehenden Überdruck diesen verzögert zur Außenhülle leitet. Das Stabilisierungsmaterial kann z.B. wabenförmig ausgebildet sein, so dass bei einer freiwerdenden Druckwelle Deformationsarbeit geleistet werden muss und so die Belastung für die Außenhülle gemindert werden kann.

Günstigerweise kann das Zwischenvolumen mit einem Absorbermaterial gefüllt sein, das aus dem Innenvolumen austretendes Material wenigstens teilweise aufnehmen kann. So kann etwa aus den Batteriezellen austretender Elektrolyt vom Absorbermaterial aufgenommen werden und gegebenenfalls auch chemisch neutralisiert werden. Bevorzugt ist das Absorbermaterial luftdurchlässig ausgebildet.

Bevorzugt ist weiterhin eine Handwerkzeugmaschine mit dem oben beschriehenen Batteriepack

Grundsätzlich kann das vorgeschlagene Batteriepack jedoch auch in anderen Maschinen und Fahrzeugen eingesetzt werden.

### Kurze Beschreibung der Zeichnung

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigt
- Fig. 1: einen Querschnitt durch eine erste Ausgestaltung eines bevorzugten Batteriepack gemäß der Erfindung; und
- Fig. 2: einen Querschnitt durch eine weitere Ausgestaltung eines bevorzugten Batteriepack mit einem Absorber in einem Zwischenvolumen gemäß der Erfindung.

### Ausführungsformen der Erfindung

In den Figuren sind gleiche oder gleichartige Komponenten mit gleichen Bezugszeichen beziffert.

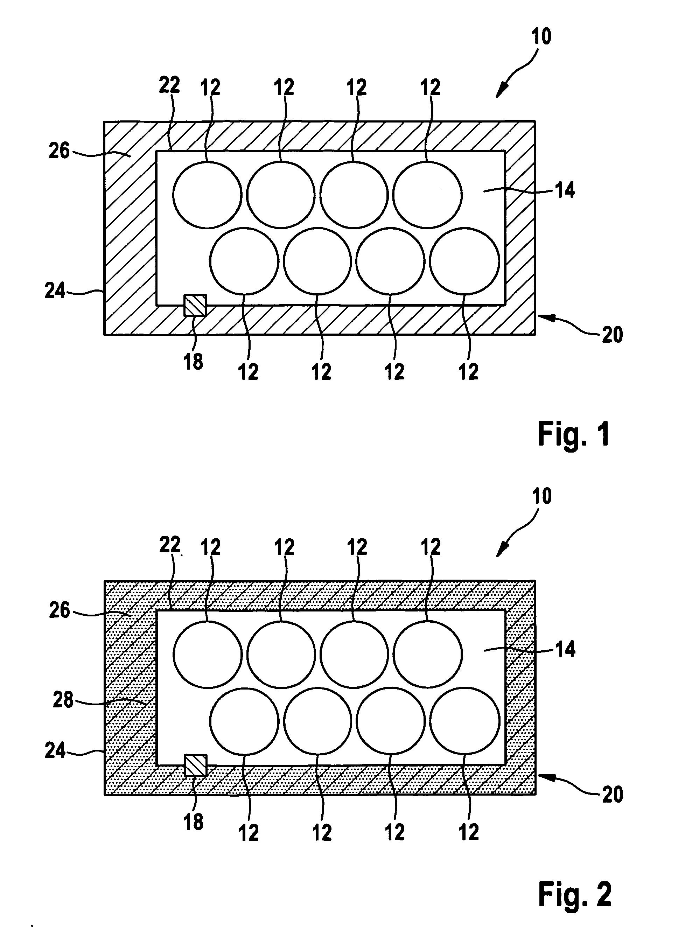

Die Fig. 1 zeigt einen Querschnitt durch ein bevorzugtes Batteriepack 10 mit mehreren Batteriezellen 12, die in einem Gehäuse 20 angeordnet sind. Das Gehäuse 20 ist beispielhaft doppelwandig ausgebildet und weist eine Innenhülle 22 und eine Außenhülle 24 auf.

Die Batteriezellen sind in einem Innenvolumen 14 in der Innenhülle 22 angeordnet. Die Batteriezellen können z.B. Lithium-Ionenzellen sein. Zwischen der Innenhülle 22 und der Außenhülle 24 ist ein Zwischenvolumen 26 angeordnet, das zur Aufnahme eines Überdrucks aus dem Innenvolumen ausgebildet ist. Beispielsweise ist das Zwischenvolumen 26 groß genug ausgebildet und/oder die Außenhülle 24 stabil genug ausgebildet, dass die Außenhülle 24 einem plötzlich auftretenden Überdruck standhalten kann.

Die Innenhülle 22 ist aus einem flexiblen oder starren Material ausgebildet und weist einen als Überdruckventil ausgebildeten Überdruckauslass 18 auf.

Das Zwischenvolumen 26 ist groß genug ausgebildet, so dass im Fehlerfall beim Auftreten eines unzulässig hohen Überdrucks im Innenvolumen 14 das Zwischenvolumen 26 den Überdruck soweit aufnehmen kann, dass die Außenhülle 24 intakt bleiben kann.

Fig. 2 zeigt eine weitere Ausgestaltung eines bevorzugten Batteriepacks 10 im Querschnitt. Der Aufbau entspricht weitgehend dem in Fig. 1, so dass zur Vermeidung unnötiger Wiederholungen auf diese Figurenbeschreibung verweisen wird. In Abwandlung zum Ausführungsbeispiel in Fig.1 ist das Zwischenvolumen 26 mit einem Absorbermaterial 28 gefüllt, das aus dem Innenvolumen 14 austretendes Material, z.B. Elektrolyt aus den Batteriezellen 12, wenigstens teilweise aufnehmen kann. Dadurch kann die Sicherheit des Batteriepacks 10 weiter gesteigert werden.

Vorteilhaft kann ein derartiges Batteriepack in einer Handwerkzeugmaschine eingesetzt werden, die schnurlos betreiben werden soll.

## Patentansprüche

1. Batteriepack (10) mit mindestens einer Batteriezelle (12) und mit einem Gehäuse (20) zur Aufnahme der wenigstens einen Batteriezelle (12), wobei das Gehäuse (20) wenigstens doppelwandig mit wenigstens einer Innenhülle (22) und einer Außenhülle (24) ausgebildet ist, **dadurch gekennzeichnet, dass** zwischen der wenigstens einen Innenhülle (22) und der Außenhülle (24) ein Zwischenvolumen (26) eingeschlossen ist, das eine Druckwelle aus einem Innenvolumen (14) aufnehmen kann, und dass die wenigstens eine Innenhülle (22) ein Überdruckventil (18) aufweist, das in Richtung Zwischenvolumen öffnet, wenn ein vuzulässig hoher Überdruck im Inner volumen entsfeht.

2. Batteriepack nach Anspruch 1, **dadurch gekennzeichnet, dass** die Innenhülle (22) wenigstens bereichsweise aus einem flexiblen Material gebildet ist.

3. Batteriepack nach einem der vorhergehenden Ansprüche, **dadurch gekennzeichnet, dass** die Innenhülle (22) wenigstens bereichsweise aus einem starren Material gebildet ist

4. Batteriepack nach einem der vorhergehenden Ansprüche, **dadurch gekennzeichnet, dass** die Außenhülle (24) wenigstens bereichsweise aus einem flexiblen Material gebildet ist.

5. Batteriepack nach einem der vorhergehenden Ansprüche, **dadurch gekennzeichnet, dass** die Außenhülle (24) wenigstens bereichsweise aus einem starren Material gebildet ist.

6. Batteriepack nach einem der vorhergehenden Ansprüche, **dadurch gekennzeichnet, dass** die Innenhülle (22) aus einem nichtbrennbaren Material gebildet ist.

7. Batteriepack nach einem der vorhergehenden Ansprüche, **dadurch gekennzeichnet, dass** das Zwischenvolumen (26) mit einem Stabilisierungsmaterial gefüllt ist, das bei einem entstehenden Überdruck diesen verzögert zur Außenhülle (24) leitet.

8. Battenepack nach einem der vorhergehenden Ansprüche, **dadurch gekennzeichnet, dass** das Zwischenvolumen (26) mit einem Absorbermaterial (28) gefüllt ist, das aus dem Innenvolumen (26) austretendes Material wenigstens teilweise aufnehmen kann.

9. Handwerkzeugmaschine mit einem Batteriepack (10) nach einem der vorhergehenden Ansprüche.

## Claims

1. Battery pack (10) with at least one battery cell (12) and with a housing (20) for receiving the at least one battery cell (12), the housing (20) being designed to be at least double-walled with at least one inner casing (22) and one outer casing (24), **characterized in that**, between the at least one inner casing (22) and the outer casing (24), an intermediate volume (26) is included, which can receive a pressure wave from an inner volume (14), and **in that** the at least one inner casing (22) has a pressure relief valve (18) which opens in the direction of the intermediate volume when an inadmissibly high excess pressure arises in the inner volume.

2. Battery pack according to Claim 1, **characterized in that** the inner casing (22) is formed at least in regions from a flexible material.

3. Battery pack according to one of the preceding claims, **characterized in that** the inner casing (22) is formed at least in regions from a rigid material.

4. Battery pack according to one of the preceding claims, **characterized in that** the outer casing (24) is formed at least in regions from a flexible material.

5. Battery pack according to one of the preceding claims, **characterized in that** the outer casing (24) is formed at least in regions from a rigid material.

6. Battery pack according to one of the preceding claims, **characterized in that** the inner casing (22) is formed from an incombustible material.

7. Battery pack according to one of the preceding claims, **characterized in that** the intermediate volume (26) is filled with a stabilizing material which, when excess pressure arises, conducts this to the outer casing (24) with a delay.

8. Battery pack according to one of the preceding claims, **characterized in that** the intermediate volume (26) is filled with an absorber material (28) which can at least partially absorb material emerging from the inner volume (26).

9. Hand held machine tool having a battery pack (10) according to one of the preceding claims.

## Revendications

1. Batterie d'accumulateurs (10) comprenant au moins une cellule de batterie (12) et au moins un boîtier (20) pour recevoir l'au moins une cellule de batterie (12), le boîtier (20) étant réalisé au moins avec deux parois avec au moins une enveloppe interne (22) et une enveloppe externe (24), **caractérisée en ce qu'**entre l'au moins une enveloppe interne (22) et l'enveloppe externe (24) est inclus un volume intermédiaire (26) qui peut recevoir une onde de pression depuis un volume intérieur (14), et **en ce que** l'au moins une enveloppe interne (22) présente une soupape de dépression (18) qui s'ouvre dans la direction du volume intermédiaire lorsqu'il se produit une surpression élevée inadmissible dans le volume intérieur.

2. Batterie d'accumulateurs selon la revendication 1, **caractérisée en ce que** l'enveloppe interne (22) est formée au moins en partie d'un matériau flexible.

3. Batterie d'accumulateurs selon l'une quelconque des revendications précédentes, **caractérisée en ce que** l'enveloppe interne (22) est formée au moins en partie d'un matériau rigide.

4. Batterie d'accumulateurs selon l'une quelconque des revendications précédentes, **caractérisée en ce que** l'enveloppe externe (24) est formée au moins en partie d'un matériau flexible.

5. Batterie d'accumulateurs selon l'une quelconque des revendications précédentes, **caractérisée en ce que** l'enveloppe externe (24) est formée au moins en partie d'un matériau rigide.

6. Batterie d'accumulateurs selon l'une quelconque des revendications précédentes, **caractérisée en ce que** l'enveloppe interne (22) est formée d'un matériau non combustible.

7. Batterie d'accumulateurs selon l'une quelconque des revendications précédentes, **caractérisée en ce que** le volume intermédiaire (26) est rempli d'un matériau stabilisant, qui, lors de l'apparition d'une surpression, guide celle-ci de manière retardée vers l'enveloppe externe (24).

8. Batterie d'accumulateurs selon l'une quelconque des revendications précédentes, **caractérisée en ce que** le volume intermédiaire (26) est rempli d'un matériau absorbant (28) qui peut recevoir au moins en partie le matériau sortant du volume interne (26).

9. Machine-outil à main comprenant une batterie d'accumulateurs (10) selon l'une quelconque des revendications précédentes.
